# EUROPÄISCHE PATENTANMELDUNG

(11) **EP 3 330 588 A1**
(43) Veröffentlichungstag der Anmeldung: **06.06.2018**
(21) Anmeldenummer: 17203851.5
(22) Anmeldetag: 27.11.2017
(51) Int. Cl.: F16L 33/207, F16L 33/22

(54) **ROHRVERBINDER**

(30) Priorität: 01.12.2016 DE 102016123263
(71) Anmelder: Rebersek, Vinko, 84034 Landshut (DE)
(72) Erfinder: Rebersek, Vinko, 84034 Landshut (DE)
(74) Vertreter: Gustorf, Gerhard

(57) **Zusammenfassung**

Der Rohrverbinder für Flüssigkeits- oder Gasleitungen hat einen Grundkörper (12), von dem einstückig ein mit radial vorstehenden Rippen versehener Anschlussabschnitt (14) axial absteht, der mit dem Grundkörper (12) durch einen gemeinsamen Durchlaufkanal (34) verbunden ist und zur Aufnahme eines Rohr- oder Schlauchendes (16) dient, das auf dem Anschlussabschnitt (14) befestigt ist. An dem Anschlussabschnitt (14) sind wenigstens drei axial voneinander beabstandete Rippen mit einem Profil ausgebildet, das einen dreieckigen Querschnitt mit jeweils einer in das Rohr- oder Schlauchende (16) eindringenden Spitze hat. Das Rohr- oder Schlauchende (16) ist auf dem Anschlussabschnitt (14) durch eine Rohrschelle (32) aus Metall gesichert.

## Beschreibung

Die Erfindung betrifft einen Rohrverbinder für Flüssigkeits- oder Gasleitungen mit einem Grundkörper, von dem einstückig ein mit radial vorstehenden Rippen versehener Anschlussabschnitt absteht, der mit dem Grundkörper durch einen gemeinsamen Durchlaufkanal verbunden ist und zur Aufnahme eines Rohr- oder Schlauchendes dient, das auf dem Anschlussabschnitt befestigt ist.

Derartige Rohrverbinder mit einem auf den Grundkörper aufgesetzten Schlauch oder Rohr müssen insbesondere bei hohen Temperaturen und Druckbelastungen großen Anforderungen an die Dichtheit gerecht werden.

Gegenstand der DE 197 15 967 C2 ist ein Rohrverbinder mit einem Grundkörper, der aus einer Vielzahl von axial ineinander geschobenen Elementen besteht, nämlich einem Buchsenteil mit Dichtring, einem axialen Fortsatz einer Kupplungszylinderwand mit Rippen, einem darauf aufgeschobenen Hülsenteil mit Führungsnuten und einer zungenförmigen Federwand. Bei diesem Aufbau sind sowohl die Herstellung als auch die Montage relativ kompliziert, zeitaufwendig und teuer.

Ein anderer Rohrverbinder ähnlicher, jedoch wesentlich einfacherer Bauart ist bekannt aus dem deutschen Gebrauchsmuster DE 20 2015 008 695 der Fa. Transitron. Der Grundkörper hat dort eine Reihe axial aufeinander folgender Ringnuten, in die entsprechend profilierte Innenvorsprünge des Rohr- oder Schlauchendes formschlüssig eingreifen. Zur Sicherung dient ein federförmig ausgebildetes Klemmelement.

Gegenstand des deutschen Gebrauchsmusters DE 20 2007 012 286 auf den Namen UPONOR ist ein Steckfitting für ein Kunststoffrohr, das auf einen Anschlussabschnitt des Grundkörpers aufgesetzt ist. Der Anschlussabschnitt hat im Querschnitt wellenförmige Rippen, an denen die glatte Innenwand des Kunststoffrohr reibschlüssig anliegt. In den Anschlussabschnitt ist vor dem Übergang in den Grundkörper eine Aufnahmenut für einen radial vorgespannten Klemmring eingearbeitet, der nach erfolgtem Aufschieben des Kunststoffrohres an dessen Innenwand kraftschlüssig anliegt.

In WO2009/077945 der Fa. UPONOR ist ein Rohrverbinder beschrieben und dargestetllt, dessen Grundkörper aus Metall besteht und einen Anschlussabschnitt hat, der im mittleren Bereich und am freien Ende jeweils eine radial vorstehende Rippe aufweist, die formschlüssig in die Rohrinnenwand eingreift. Das Rohr besteht aus PEX-Polyethylen mit Formgedächtniseigenschaften. Zur axialen Sicherung dient ein elastischer Klemmring.

Der Erfindung liegt die Aufgabe zugrunde, einen weniger kompliziert aufgebauten Rohrverbinder zur Verfügung zu stellen, bei dem mit einfachen Maßnahmen eine kraft- und formschlüssige Verbindung des Rohr- oder Schlauchendes mit dem Anschlussabschnitt des Grundkörpers gewährleistet wird, die höchste Anforderungen an die Dichtheit erfüllt, ohne dass die Innenwand des Schlauch- oder Rohrendes vor dem Aufschieben an das Rippenprofil des Anschlussabschnittes angepasst werden muss.

Zur Lösung dieser Aufgabe ist vorgesehen, dass an dem Anschlussabschnitt wenigstens drei axial voneinander beabstandete Rippen mit einem Profil ausgebildet sind, das einen dreieckigen Querschnitt mit jeweils einer in das Rohr- oder Schlauchende eindringenden Spitze hat, wobei das Rohr- oder Schlauchende auf dem Anschlussabschnitt durch eine Rohrschelle aus Metall gesichert ist.

Dabei ist es von Vorteil, wenn die am freien Ende des Anschlussabschnitts angeordnete Endrippe widerhakenförmig ausgebildet ist und eine geneigte Flanke als Aufschieberampe für das Rohr- oder Schlauchende hat.

Vorzugsweise haben die axial anschließenden Rippen an ihrer Spitze einen von Rippe zu Rippe ansteigenden Durchmesser, während die im Bereich eines Klemmelementes liegende Rippe an ihrer Spitze wieder einen kleineren Durchmesser hat, der etwa dem Spitzendurchmesser der widerhakenförmigen Endrippe entspricht.

In vorteilhafter Weiterbildung der Erfindung besteht das Rohr- oder Schlauchende aus PEX-Kunststoff mit Formgedächtniseigenschaften.

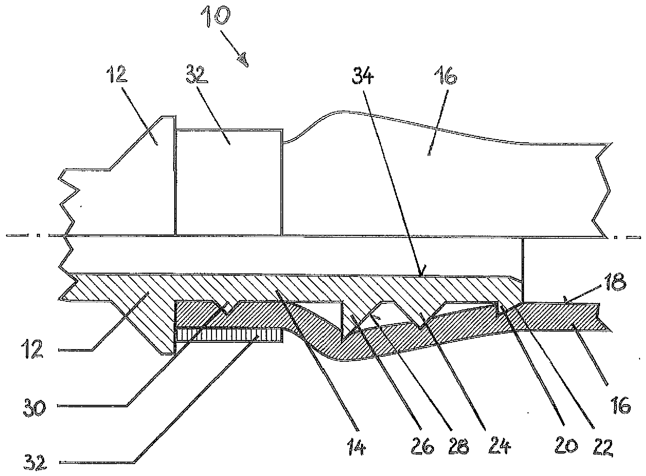

Die Erfindung ist nachstehend an einem Ausführungsbeispiel erläutert, das in der Zeichnung dargestellt ist. Diese zeigt eine Ansicht und in der unteren Hälfte einen Längsschnitt durch einen Rohrverbinder gemäß der Erfindung.

Die Figur zeigt einen Rohrverbinder 10 für Flüssigkeits- oder Gasleitungen, der einen Grundkörper 12 aus Metall hat, von dem ein zylindrischer Anschlussabschnitt 14 axial absteht. Der Grundkörper 12 und der Anschlussabschnitt 14 sind einstückig als Metalldrehteil hergestellt und durch einen gemeinsamen Durchlaufkanal 34 miteinander verbunden. Auf den Anschlussabschnitt 14 ist ein Rohr- oder Schlauchende 16 einer Kunststoffleitung aufgeschoben, die als Flüssigkeits- oder Gasleitung dient.

Um einen druckdichten Anschluss des Schlauchendes 16 auf dem Grundkörper 12 zu gewährleisten, sind an dem Anschlussabschnitt 14 mehrere, hier vier axial voneinander beabstandete Rippen ausgebildet, die einen dreieckigen Querschnitt haben, wobei die Dreieckspitzen nach der Montage in die Innenwand 18 des Schlauch- oder Rohrendes 16 eingreifen.

Gemäß der Erfindung ist die am freien Ende des Anschlussabschnitts 14 ausgebildete Endrippe 20 widerhakenförmig ausgebildet und hat eine geneigte Flanke 22, die als Aufschieberampe für das Schlauchende 16 dient. Mit axialem Abstand von dieser Endrippe 20 ist eine Dreiecksrippe 24 in Form eines im Querschnitt gleichschenkligen Dreiecks vorgesehen, wobei der Durchmesser an der Dreieckspitze größer ist als der Außendurchmesser der widerhakenförmigen Endrippe 20. An diese Dreiecksrippe 24 schließt sich mit axialem Abstand eine weitere Widerhakenrippe 26 an, deren Außendurchmesser nochmals größer ist als der Durchmesser der Dreiecksrippe 24. Da auch diese Widerhakenrippe 26 eine geneigte Flanke 28 hat, wird auch an dieser Stelle das Aufschieben des Schlauchendes 16 begünstigt.

Mit axialem Abstand von der Widerhakenrippe 26 ist an dem Anschlussabschnitt 14 eine weitere Rippe 30 mit dem Querschnitt eines gleichschenkligen Dreiecks ausgebildet, dessen Spitze etwa im Durchmesserbereich der widerhakenförmigen Endrippe 20 liegt.

Zur zusätzlichen Sicherung des Schlauchendes 16 auf dem Anschlussabschnitt 14 des Grundkörpers 12 kann ein ringförmiges Klemmelement, beispielsweise in Form einer Rohrschelle 32 vorgesehen sein. Gemäß der Erfindung kann das Rohr- oder Schlauchende 16 aus PEX-Kunststoff mit Formgedächtniseigenschaften bestehen. Wenn das Rohr- oder Schlauchende 16 aus einem solchen Kunststoff besteht, kann es vor der Montage mechanisch aufgeweitet und auf den Anschlussabschnitt 14 aufgehoben werden. Nach einer gewissen Zeitverzögerung zieht sich das Schlauchende 16 aufgrund des genannten Effektes wieder zusammen, so dass eine dichte Verbindung mit dem Grundkörper 12 entsteht. Wenn die Rohrschelle 32 aus einem zylindrischen Klemmelement aus Metall besteht, ergibt sich aufgrund der Reibungspaarung Metall auf Rohr oder Schlauch ein stabiler Halt des Schlauchendes 16 auf dem Anschlussabschnitt 14. Das Klemmelement bietet damit einen noch stabileren Halt des Schlauchendes 16 auf dem Grundkörper 12 und erzeugt einen höheren Druckwiderstand für den gesamten Rohrverbinder 10. Damit ergibt sich auch bei Temperaturschwankungen und mechanischen Belastungen und bei hohen Anforderungen an den Druckwiderstand eine sehr dichte Verbindung, die traditionelle Rohrverbinder nicht bieten können.

Ein Vorteil der Erfindung besteht schließlich auch darin, dass aufgrund der größeren Anzahl von Rippen an dem Anschlussabschnitt 14 mehrere Kontaktlinien und damit Dichtungsflächen zum aufgeschobenen Schlauchende 16 vorliegen, die dazu beitragen, mögliche Leckstellen zu vermeiden.

## Patentansprüche

1. Rohrverbinder für Flüssigkeits- oder Gasleitungen mit einem Grundkörper (12), von dem einstückig ein mit radial vorstehenden Rippen versehener Anschlussabschnitt (14) axial absteht, der mit dem Grundkörper (12) durch einen gemeinsamen Durchlaufkanal (34) verbunden ist und zur Aufnahme eines Rohr- oder Schlauchendes (16) dient, das auf dem Anschlussabschnitt (14) befestigt ist, **dadurch gekennzeichnet, dass** an dem Anschlussabschnitt (14) wenigstens drei axial voneinander beabstandete Rippen mit einem Profil ausgebildet sind, das einen dreieckigen Querschnitt mit jeweils einer in das Rohr- oder Schlauchende (16) eindringenden Spitze hat, wobei das Rohr- oder Schlauchende (16) auf dem Anschlussabschnitt (14) durch ein Klemmelement in Form einer Rohrschelle (32) gesichert ist.

2. Rohrverbinder nach Anspruch 1, **dadurch gekennzeichnet, dass** die Rohrschelle (32) aus Metall besteht.

3. Rohrverbinder nach Anspruch 1 oder 2, **dadurch gekennzeichnet, dass** die am freien Ende des Anschlussabschnitts (14) angeordnete Endrippe (20) widerhakenförmig ausgebildet ist und eine geneigte Flanke (22) als Aufschieberampe für das Rohr- oder Schlauchende (16) hat.

4. Rohrverbinder nach Anspruch 3, **dadurch gekennzeichnet, dass** mit axialem Abstand von der Endrippe (20) eine Dreiecksrippe (24) in Form eines im Querschnitt gleichschenkligen Dreiecks ausgebildet ist, dessen Durchmesser an der Dreieckspitze größer ist als der Außendurchmesser der Endrippe (20).

5. Rohrverbinder nach Anspruch 4, **dadurch gekennzeichnet, dass** sich mit axialem Abstand von der Dreiecksrippe (24) eine weitere Widerhakenrippe (26) anschließt, deren größter Durchmesser größer ist als der Durchmesser der Dreiecksrippe (24).

6. Rohrverbinder nach einem der vorhergehenden Ansprüche, **dadurch gekennzeichnet, dass** die im Bereich der Rohrschelle (32) angeordnete Rippe (30) die Form eines im Querschnitt gleichschenkligen Dreiecks hat, dessen Spitze einen Durchmesser hat, der dem Außendurchmesser der Endrippe (20) entspricht.

7. Rohrverbinder nach Anspruch 6, **dadurch gekennzeichnet, dass** die Rohrschelle (32) als zylindrischer Klemmring ausgebildet ist und mit dem Rohr- oder Schlauchende (16) bündig abschließt und dieses formschlüssig auf die dort angeordnete Rippe (30) des Anschlussabschnitts (14) drückt.

8. Rohrverbinder nach einem der vorhergehenden Ansprüche, **dadurch gekennzeichnet, dass** das Rohr- oder Schlauchende (16) aus PEX-Kunststoff mit Formgedächtniseigenschaften besteht.
